# EUROPEAN PATENT APPLICATION

(11) **EP 4 411 417 A1**
(43) Date of publication of application: **07.08.2024**
(21) Application number: 24154675.3
(22) Date of filing: 30.01.2024
(51) Int. Cl.: G01S 13/89, A61H 3/06, G01S 13/93, G01S 15/89, G01S 15/93, G01S 17/89

(54) **A METHOD OF ASSISTING A VISUALLY IMPAIRED USER**

(30) Priority: 31.01.2023 EP 23461507
(71) Applicant: Gora, Michal, 82008 Unterhaching (DE)
(72) Inventor: Gora, Michal, 82008 Unterhaching (DE)
(74) Representative: AOMB Polska Sp. z.o.o.

(57) **Abstract**

The present disclosure relates to methods of processing physical environment data and detecting physical objects for visually impaired user. The method discloses steps f a)emitting a wave which can be reflected from a physical object and returned to a user by a first means, b) sending a transmitted wave into direction of physical objects environment by the first means, c) capturing a reflected wave by the first means such that it provides information regarding a direction from which the reflected wave has been recorded, d) converting the reflected wave into a band that can be heard by the user, e) mapping a physical environment by a mapping means and creating a digital map of physical objects, wherein the mapping means are a technology of ToF and/or a Lidar and/or an echolocation and/or a radar, f) applying sound localization algorithms suitable for determining locations for accuracy enhancements on digital map such that an at least one object on the digital map is, virtually, emitting a virtual sound which also provides information regarding a direction from which the virtual sound is emitted, g) summing the reflected wave and the at least one virtual sound, and providing it to the user.

## Description

### TECHNICAL FIELD

The present disclosure relates to methods of processing physical environment data and detecting physical objects for visually impaired user.

### BACKGROUND ART.

In the state of the art, there are many solutions intended to support visually impaired and blind people by providing them with sound signals, including binaural ones, in which the signals are collected by various types of sensors and converted into sound audible to humans. The most popular solution is the use of ultrasound to map the environment, but there are also solutions using radars, time-of-flight (ToF) sensors, and LiDAR technology. It is known from the state of the art that solutions include binaural signal collection using an artificial auricle, as well as the use of artificial intelligence.

Document RU2802853C1 discloses a spatial sound system for navigation of people with visual impairments comprises an ultrasonic distance sensor, a lidar sensor, an infrared proximity sensor, a processing unit, a memory unit and a power source placed on the frame, as well as a sound reproduction module. The system is configured to transmit data from the sensor unit to the processing unit through an ADC, which generates spatial sounds after combining the data from the sensor unit with the data of the gyroscope-accelerometer. The memory unit stores and uses the readings of the sensors to generate the amplitude and frequency of the spatial sound.

Document DE202010002475U1 discloses tools for spatial orientation in complete darkness or blindness by high resolution, spatial, direct representation of the environment traversed as audible phenomenon by Echopeilung without use of imaging, data storage and / or optical gauge being characterized in that a Utraschallquelle, 2 ultrasonic receiver 2 headphone speaker so (with a control device consisting of electrical signal generator and frequency divider) are connected such that the echoes of the emitted ultrasonic pulses are perceptible as audible sound pulses in stereo sound, and information about the location, size, shape and pulse convey surrounding environmental elements.

Document US4761770A discloses a method for processing a reflected echo signal which is received from an object and supplied to an ultrasonic binaural sensory aid comprising the step of stretching said reflected signal in time axis, and the step of converting the stretched signal into a signal of audible frequency, and a blind aid which works by the above-mentioned method.

### SUMMARY OF THE INVENTION

It is the object of the present invention to provide synergistic combination of different sensory processing techniques, which significantly enhances the accuracy of detections while simultaneously minimizing perceptual challenges for the user.

According to first aspect of the present invention there is provided a method of assisting a visually impaired user comprising:
a) Emitting a wave which can be reflected from a physical object and returned to a user by a first means,
b) Sending a transmitted wave into direction of physical objects environment by the first means,
c) Capturing a reflected wave by the first means such that it provides information regarding a direction from which the reflected wave has been recorded,
d) Converting the reflected wave into a band that can be heard by the user,
e) Mapping a physical environment by a mapping means and creating a digital map of physical objects, wherein the mapping means are a technology of ToF and/or a Lidar and/or an echolocation and/or a radar,
f) Applying sound localization algorithms suitable for determining locations for accuracy enhancements on digital map such that an at least one object on the digital map is, virtually, emitting a virtual sound which also provides information regarding a direction from which the virtual sound is emitted,
g) Summing the reflected wave and the at least one virtual sound, and providing it to the user.

Preferably, the reflected wave is a radio wave or a sound wave, preferably, an ultrasound wave.

In one embodiment providing information about a captured reflected wave in step c) uses the digital tool, preferably digitals processing techniques which are beamforming techniques to extract the spatial information from the captured signal or the physical tool, preferably an artificial pinna.

Selection of the physical object from the digital map in step f) is based on assessed proximity or velocity of the object or a movement direction of the object.

Preferably, the first means are sound emitters operating in ultrasound frequency band and/or omnidirectional microphones and/or radar device with reception antennae.

Creating a digital map is conducted by an analog-to-digital converter.

In one of the preferred embodiments, technology of ToF and/or Lidar is used to obtain the digital map of objects in the physical environment and echolocation or radar is used to obtain more detailed information about selected physical objects in the digital map.

Preferably, echolocation or radar are modulated to provide better separation between physical objects.

According to second aspect of the present invention there is provided a computer program comprising instructions which, when the program is executed by a computer, cause the computer to carry out the method.

According to third aspect of the present invention there is provided a computer-readable medium comprising instructions which, when executed by a computer, cause the computer to carry out the method.

### ADVANTAGEOUS EFFECTS

The present invention is a reliable and user-friendly experience, effectively bridging the gap between complex environmental data and user perception. The invention is adaptable and learns from user's interactions. In the case of implementation of machine learning, it allows refine auditory output and improving accuracy and user experience. The invention is universal and allows for integration into various device platforms, offering an improved navigation experience for visually impaired users. It allows to perceive objects from near to mid proximity. The method allows for translating complex environmental data into an accessible and intuitive auditory format and has wide range of options for binaural audio feedback customization.

### BRIEF DESCRIPTION OF THE DRAWINGS

The present disclosure will be now discussed with reference to the drawings, which show in:
- Fig. 1 -: discloses an artificial pinna,
- Fig. 2 -: discloses the present method with a use of the artificial pinna and radio wave,
- Fig. 3 -: discloses the present method with a use of the artificial pinna and radio wave on a user,
- Fig. 4 -: discloses the present method with a use of the artificial pinna and ultrasound wave.

### DETAILED DESCRIPTION OF THE DISCLOSURE

For a proper understanding of the disclosure, it is disclosed in the detailed description below. This invention relates to a method for processing environmental sensory data, enhancing spatial navigation and obstacle detection for the blind and visually impaired users. The invention discloses transforming data from various sensors into spatially oriented auditory signals.

The method of assisting a visually impaired user comprises following steps:
a) Emitting a wave which can be reflected from a physical object and returned to a user by a first means,
b) Sending a transmitted wave into direction of physical objects environment by the first means,
c) Capturing a reflected wave by the first means such that it provides information regarding a direction from which the reflected wave has been recorded,
d) Converting the reflected wave into a band that can be heard by the user,
e) Mapping a physical environment by a mapping means and creating a digital map of physical objects, wherein the mapping means are a technology of, for example, ToF (Time of Flight) and/or a Lidar and/or an echolocation and/or a radar,
f) Applying sound localization algorithms suitable for determining locations for accuracy enhancements on digital map such that an at least one object on the digital map is, virtually, emitting a virtual sound which also provides information regarding a direction from which the virtual sound is emitted,
g) Summing the reflected wave and the at least one virtual sound, and providing it to the user.

The user is the beneficiary of two systems/channels from which he receives information simultaneously. A first channel is information about the reflected wave using the first means and a second channel is at least one virtual sound achieved by the mapping means. The first means are intended to send and receive data in the form of waves. In this embodiment, the first means are sound emitters operating in ultrasound frequency band and/or omnidirectional microphones and/or radar device with reception antennae. The mapping means are intended to perceive the physical environment in front of the user and collect data by the specific technology. In this embodiment, the mapping means is a technology of ToF and/or a Lidar and/or an echolocation and/or a radar.

In the first channel, the first means emit a wave which encounters the physical object in front of the user and reflects from it and returns to the first means. The first means sends the transmitted wave into direction of a physical objects' environment and the reflected wave is captured by the first means. In this embodiment, the wave is radio wave or sound wave, preferably, an ultrasound wave.

In one of the embodiments, the information regarding the direction from which the reflected wave has been recorded in the step c) is saved by a physical tool or a digital tool. In this embodiment, the digital tool are algorithms in the form of digitals processing techniques which are beamforming techniques to extract the spatial information. The digital tool replicates pinnae effects in vertical and horizontal directions. The physical tool is an artificial pinna. In this embodiment, at least one pair of artificial pinnae is used as the physical tool.

The shape and characteristics of a pinnae play a significant role in hearing and capturing senses. The pair of artificial pinnae introduces spectral modifications to incoming reflected waves.

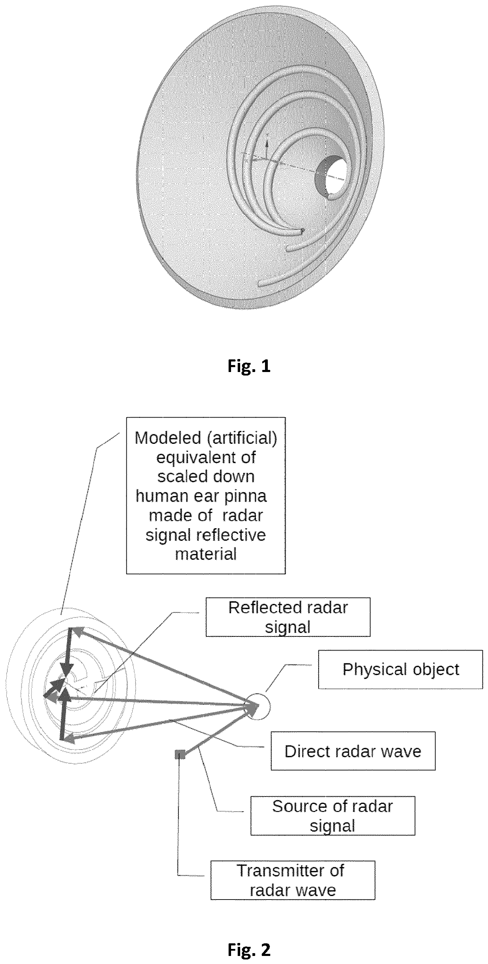

The present invention discloses possibility of use the physical model in the form of the artificial pinnae. The artificial pinnae are spiral structure comprising spiral elements which are arranged in a conical tube in a spiral way around an opening leading to a sensor - in this embodiment of the invention the omnidirectional microphone being the first means. The artificial pinna is shown on Fig. 1. The spiral elements have different curvatures and are made of a material that reflects waves well. Preferably, the material is metal, plastic, wood or rubber.

The spiral elements are arranged in a conical tube in a spiral way around an opening and the spiral elements have different shapes. A spiral with the spiral elements of equal angular length or a spiral with the spiral elements of different angular lengths.

The artificial pinnae are suitable to act as an amplifier or attenuator of sound. Waves that are emitted by the first means and then reflected from the physical object hit the spiral elements, which reflect the waves, and then lead them into the opening and hit the sensor, the omnidirectional microphone. The wave that is recorded by the omnidirectional microphone is amplified or attenuated compared to the wave that was originally emitted by the first means.

The spiral structure has a strong directional characteristic mainly in the vertical plane what causes an occurrence of a resonance phenomenon for characteristic frequencies for the distance between the spiral elements in a given direction and an inner surface of the cone. The strongest effect of the resonance phenomenon occurs when a cone opening angle is 90 degrees.

The characteristics frequencies are modified by changing the geometry of the spiral structure of the artificial pinnae. Modifications are done by changing the length and curvature of the spiral elements and their shape and size details depending on the required properties of the characteristics. The shape of the conical tube can be modified. The other preferable shapes are a shape of the cross-section close to an ellipse or introducing modification of changing the angle of inclination of the internal surfaces of the conical tube. The spiral structure of the artificial pinnae is used to detect objects in the characteristic's frequency range for which the spiral elements are best suited and approximately reflect the frequency-dependent directional model of the human cochlea in the vertical plane.

Changing the geometry of the spiral structure of the artificial pinnae influence the characteristics frequencies and a directional range of the spiral structure. The directional range can be limited by modifications in the geometry of the spiral structure. This modification is preferably changing the length of the spiral elements. If the spiral elements become shorter towards the opening where is the omnidirectional microphone located, waves from a given direction will be amplified more than waves from other directions.

The artificial pinnae's angular range of perception (directional range) in the vertical plane can be limited to any angle. The artificial pinnae can be constructed to hear in the forward space, ignoring the perception of wave from behind.

In the embodiment where the physical tool and the first means are used, the first means captures modified signal by the physical tool..

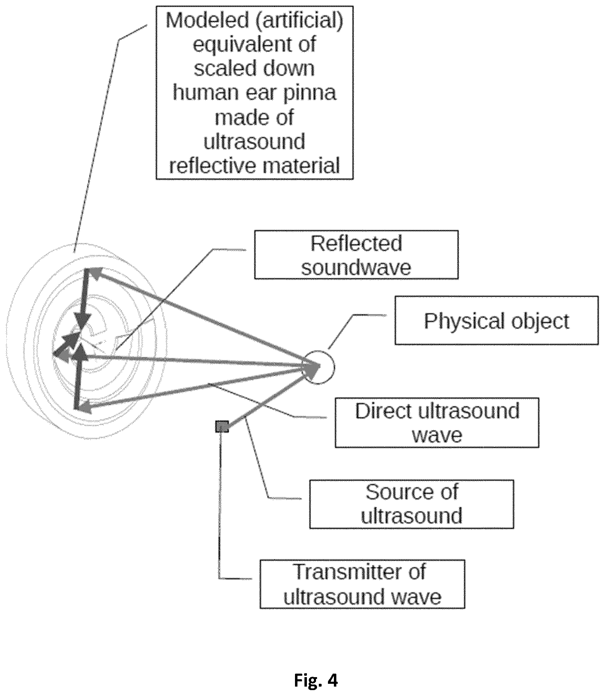

In one of the embodiments, the first means is in the form of sound emitters operating in ultrasound frequency band and omnidirectional microphones, where the sound emitter generates sounds in ultrasound frequency band in the physical environment. In this embodiment of the invention, the reflected wave is the ultrasound wave. In this embodiment, omnidirectional microphones capture modified signal by the physical tool. The information regarding a direction from which the reflected wave has been recorded is saved by the physical tool. This embodiment uses at least one pair of artificial pinnae as the physical tool as this is seen on Fig. 4. The pair of artificial pinnae introduces spectral modifications to incoming ultrasound waves. The omnidirectional microphone captures reflected ultrasound waves exhibiting spectral modifications introduced by the artificial pinnae for elevation cues.

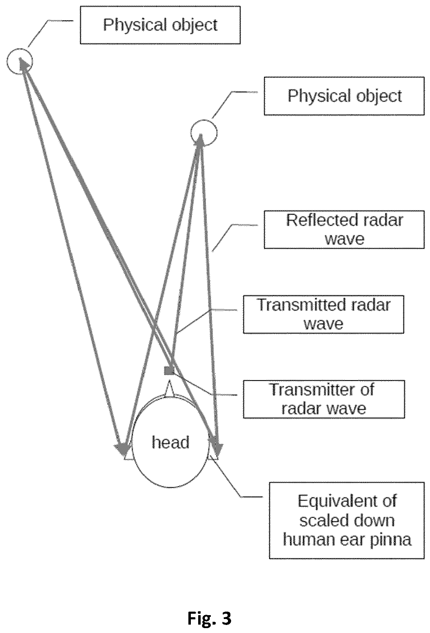

In one of the embodiments, the first means is in the form of radar device with reception antennae generating radio waves in the physical environment. In this embodiment of the invention, the reflected wave from the physical object is the radio wave - Fig. 3. In this embodiment, the radar device with reception antennae captures modified signal by the physical tool. This embodiment uses at least one pair of artificial pinnae as the physical tool as this is seen on Fig. 2. The pair of artificial pinnae introduces spectral modifications to incoming radio waves.

In the embodiment where the digital tool and the first means are used, the first means captures the reflected wave and then the digital tool modifies the signal from the reflected wave. In this embodiment, the digital tool is digitals processing technique which are beamforming techniques to extract the spatial information from the captured signal, being the reflected wave. Beamforming techniques are applied to introduce directionality of the filtering mimicking directional resonant characteristics of the pinnae for elevation cues.

In the embodiment where the first means is in the form of the omnidirectional microphone and sound emitters operating in ultrasound frequency band, the reflected ultrasound is firstly captured by the first means and then the digital tool is applied in order to introduce directionality of the filtering mimicking directional resonant characteristics of the pinnae for elevation cues. In this embodiment, the beamforming techniques are applied.

In the embodiment where the first means is in the form of radar device with reception antennae, the reflected radio wave is firstly captured by the first means and then the digital tool is applied in order to introduce directionality of the filtering mimicking directional resonant characteristics of the pinnae for elevation cues. In this embodiment, the beamforming techniques are applied.

The signal is converted into a band that can be heard by the user. In this embodiment, shifting the signals spectrum converts the reflected wave. Shifting is conducted while preserving phase relations.

In the second channel, the mapping means map a physical environment in front of the user and received data is digitized in order to receive the digital map. This digital map is used to identify the physical objects that need to be precisely located. In this embodiment, an analog-to-digital Converter (ADC) is used for digitization. Then sound localization algorithms are applied to determine locations of physical objects for accuracy enhancements on the digital map. Algorithms causes the physical object to constitute virtually, emitting a virtual sound which also provides information regarding a direction from which the virtual sound is emitted. In one embodiment, selection of the physical object from the digital map is based on assessed proximity or velocity of the object or a movement direction of the object.

The mapping means is preferably a technology of ToF and/or a Lidar and/or an echolocation and/or a radar. In one of the embodiments, the technology of ToF and/or Lidar is used to obtain the digital map of objects in the physical environment and echolocation or radar is used to obtain more detailed information about selected physical objects in the digital map. The technology ToF and Lidar allows for the measurement of the distance to the physical object. Preferably, echolocation or radar are modulated to provide better separation between physical objects on the digital map.

In one of the embodiments of the invention, the mapping means uses the technology of Lidar or ToF simultaneously with the echolocation or radar.

The technology of ToF and Lidar allows virtual mapping of the physical objects of the surroundings for the purpose of generation of the digital map for perception of the objects in the physical environment. This technology allows for obtaining properties of the physical object like distance, velocity, direction of arrival, size, texture or material. Those technologies are resistant to interferences caused by signal reflections from the physical objects.

The technology of echolocation and radar allows to obtain detailed information about the physical objects from the digital map. An acoustic or radio signal is generated and emitted in the direction of a selected physical objects. This signal is reflected from the selected physical objects and is transmitted to the user's ears. The received signal is an acoustic or radio echo which allows to assess the distance between the user the selected physical object. In one of the embodiments, technology of the echolocation or radar are modulated to provide better separation between physical objects on the digital map and processed eliminate interference that can be caused by signal reflections from the other physical objects. In one embodiment, the received signal is processed using beam forming algorithms that reflect directional properties of the received signal.

The summed, converted, processed waves and the at least one virtual sound from the digital map are provided directly to the ear from corresponding two channels, preferably using headphones emitting directly into ear or, using bone conduction devices. A brain of the user interprets the binaural signals accordingly in analogical manner to regular audio echo reflections.

The present invention discloses a computer program comprising instructions which, when the program is executed by a computer, cause the computer to carry out the above-mentioned method.

The present invention discloses a computer-readable medium comprising instructions which, when executed by the computer, cause the computer to carry out the above-mentioned method.

## Claims

1. A method of assisting a visually impaired user comprising
a) Emitting a wave which can be reflected from a physical object and returned to a user by a first means,
b) Sending a transmitted wave into direction of physical objects environment by the first means,
c) Capturing a reflected wave by the first means such that it provides information regarding a direction from which the reflected wave has been recorded,
d) Converting the reflected wave into a band that can be heard by the user,
e) Mapping a physical environment by a mapping means and creating a digital map of physical objects, wherein the mapping means are a technology of ToF and/or a Lidar and/or an echolocation and/or a radar,
f) Applying sound localization algorithms suitable for determining locations for accuracy enhancements on digital map such that an at least one object on the digital map is, virtually, emitting a virtual sound which also provides information regarding a direction from which the virtual sound is emitted,
g) Summing the reflected wave and the at least one virtual sound, and providing it to the user.

2. The method according to claim 1, wherein the reflected wave is a radio wave or a sound wave, preferably, an ultrasound wave.

3. The method according to claim 1 or 2, wherein providing information about a captured reflected wave in step c) uses the digital tool, preferably digitals processing techniques which are beamforming techniques to extract the spatial information from the captured signal or the physical tool, preferably an artificial pinna.

4. The method according to claim 1, 2 or 3, wherein selection of the physical object from the digital map in step f) is based on assessed proximity or velocity of the object or a movement direction of the object.

5. The method according to any claim 1-4, wherein the first means are sound emitters operating in ultrasound frequency band and/or omnidirectional microphones and/or radar device with reception antennae.

6. The method according to any claim 1-5, wherein creating a digital map is conducted by an analog-to-digital converter.

7. The method according to claim 1-6, wherein technology of ToF and/or Lidar is used to obtain the digital map of objects in the physical environment and echolocation or radar is used to obtain more detailed information about selected physical objects in the digital map.

8. The method according to claim 6 or 7, wherein echolocation or radar are modulated to provide better separation between physical objects.

9. A computer program comprising instructions which, when the program is executed by a computer, cause the computer to carry out the method of claim 1.

10. A computer-readable medium comprising instructions which, when executed by a computer, cause the computer to carry out the method of claim 1.
